# FASCICULE DE BREVET EUROPEEN

(11) **EP 2 953 751 B1**
(45) Date de publication et mention de la délivrance du brevet: **30.10.2024**
(21) Numéro de dépôt: 14706894.4
(22) Date de dépôt: 05.02.2014
(51) Int. Cl.: B23B 39/16, B23B 49/00, G10K 11/172

(54) **DISPOSITIF DE PERÇAGE D'UNE PIÈCE ACOUSTIQUE, PROCÉDÉ DE PERÇAGE ACOUSTIQUE ET PROCÉDÉ DE FABRICATION D'UNE PIÈCE ACOUSTIQUE**
VORRICHTUNG ZUM BOHREN EINER AKUSTISCHEN KOMPONENTE, AKUSTISCHES BOHRVERFAHREN UND VERFAHREN ZUR HERSTELLUNG EINER AKUSTISCHEN KOMPONENTE
DRILLING APPARATUS FOR AN ACOUSTIC ELEMENT, ACOUSTIC DRILLING PROCESS AND PROCESS OF MANUFACTURING OF AN ACOUSTIC ELEMENT

(30) Priorité: 06.02.2013 FR 1351028
(43) Date de publication de la demande: 16.12.2015
(73) Titulaire: Safran Nacelles, 76700 Gonfreville-l'Orcher (FR)
(72) Inventeur: RAMAGE, Denis, F-76280 Heuqueville (FR); BARBARIT, Didier, F-85600 Saint Georges De Montaigu (FR)
(74) Mandataire: Germain Maureau
(86) Numéro de dépôt international: PCT/FR2014/050220
(87) Numéro de publication internationale: WO 2014/122400

(56) Documents cités:
- EP-A2- 1 101 555
- EP-B1- 2 178 684
- DE-A1- 10 259 285
- DE-A1- 102004 009 080
- FR-A1- 2 703 280
- US-A- 1 962 566
- US-A- 4 759 513
- US-A- 5 147 160

## Description

L'invention se situe dans le domaine du perçage des pièces acoustiques en aéronautique notamment mais non exclusivement du perçage des pièces en composite, et concerne plus particulièrement un dispositif de perçage auto-adaptatif de pièces acoustiques.

Dans le domaine du perçage de pièces acoustiques, des robots à bras, ou des machines 5 axes, sont utilisés pour porter des têtes intégrant des forets disposés en ligne ou de manière matricielle. Ces têtes sont fixées sur les bras des robots ou des machines 5 axes et chaque robot ou machine 5 axes est programmé pour placer une tête au-dessus d'une zone à percer d'une pièce acoustique, pour qu'ensuite les forets intégrés dans la tête puissent percer la zone. Puis cette tête est déplacée au dessus de la pièce acoustique selon une trajectoire calculée pour optimiser le temps et la qualité de perçage des pièces acoustiques afin de rejoindre une autre zone à percer de la pièce acoustique et d'y réaliser un autre perçage.

Actuellement, les têtes de perçage acoustique sont réalisées en disposant des forets de manière matricielle, par exemple 9 forets répartis en trois rangées de trois colonnes (3*3) ou encore 21 forets répartis en 7 lignes et trois colonnes (7*3). Dans ce type de dispositif les extrémités de perçage des forets sont disposées dans un même plan fixe par rapport à la tête de perçage acoustique. EP2178684 B1 divulgue un dispositif de perçage avec plusieurs cassettes de perçage autonomes.

Le perçage matriciel est plus efficace que le perçage en ligne mais présente néanmoins des inconvénients, notamment l'impossibilité d'aligner les extrémités des forets parallèlement à une peau non plane et l'impossibilité subséquente de gérer la profondeur de chaque trou, ou encore la nécessité de modifier la tête de perçage pour gérer des espaces inter-patchs réduits ou en fonction de l'angle d'attaque de la tête de perçage, ou encore la cadence de perçage relativement faible.

On entend par inter-patch la distance laissée non percée entre deux patchs (deux perçages) contigus.

L'impossibilité d'aligner les extrémités des forets parallèlement à une peau non plane de pièce acoustique à percer impose parfois de casser des forets afin qu'ils ne pénètrent pas de trop dans la pièce acoustique à percer risquant ainsi de percer la pièce acoustique de part en part, cette opération de casse fait perdre un temps précieux aux opérateurs, et coûte cher de surcroît puisque de nouveaux forets doivent les remplacer une fois que les forets cassés ne sont plus utilisés.

Supplémentairement, l'entretien de telles têtes de perçage de pièces acoustiques est malaisé notamment en ce qu'actuellement des opérateurs de production spécialisés manipulent ces têtes de perçage, mais quand un problème survient, l'opérateur doit faire appel à une équipe de maintenance spécialisée, ce qui coûte cher de surcroît et ralentit la production.

Un but de l'invention est donc de proposer un dispositif de perçage de pièces acoustiques affranchi des inconvénients précités.

A cet effet, la présente invention a pour objet un dispositif de perçage selon la revendication 1 comprenant une tête de perçage, remarquable en ce que la tête de perçage comprend un bloc de support d'au moins deux cassettes de perçage autonomes comprenant chacune au moins un foret de perçage.

On entend par cassettes autonomes des cassettes montées indépendamment les unes par rapport autres sur le bloc de support, et plus généralement constituant chacune une unité de perçage autonome à part entière une fois installées sur le bloc de support.

Cette configuration présente plusieurs avantages notamment en ce que, du fait que les cassettes sont des unités autonomes, chaque cassette peut être réglée indépendamment des autres. Le dispositif présente donc une plus grande flexibilité qu'un dispositif de type à perçage matriciel classique.

Selon une caractéristique l'invention, chaque cassette comprend une armature fixe par rapport au bloc de support et un support de forets mobile le long de l'axe principal de la cassette entre une position rétractée et une position déployée.

Avantageusement, une telle disposition permet un réglage de la hauteur de chaque cassette par rapport à la surface à percer, et ce indépendamment les unes des autres. En effet, du fait que le support de forets soit mobile le long de l'axe principal de la cassette permet donc de le faire translater.

Selon une caractéristique optionnelle de l'invention, chaque cassette comprend un moyen de mise en mouvement de translation de son support de forets par l'intermédiaire d'un mécanisme monté sur son armature fixe et sur le support de forets.

Selon une caractéristique optionnelle de l'invention, le mécanisme de mise en mouvement de translation est une vis à billes, la vis à billes étant montée sur l'armature fixe de la cassette.

La vis à billes est alors mise en mouvement de rotation via un mécanisme de transmission reliant un moteur électrique monté par exemple sur l'armature fixe à la vis à billes notamment de type courroie ou chaîne.

Selon une caractéristique optionnelle de l'invention, le moyen de mise en mouvement de translation permet de régler en position intermédiaire le support de forets entre sa position rétractée et sa position déployée.

Selon une caractéristique optionnelle de l'invention, le réglage en position intermédiaire de chaque support de forets est effectué en continu.

De cette manière, il est possible de faire un réglage précis de la hauteur du support de forets de chaque cassette par rapport à la surface à percer.

Selon une caractéristique optionnelle de l'invention, le réglage en position intermédiaire de chaque support de forets est effectué de manière discrète.

Avantageusement, le réglage en hauteur des supports de forets de chaque cassette indépendamment des unes des autres permet d'adapter le profil d'agencement des forets les uns par rapport aux autres de manière à ce qu'il corresponde à la forme de la surface à percer.

Selon une caractéristique optionnelle de l'invention, chaque cassette est fixée sur le bloc de support de manière amovible.

Avantageusement, en cas de défection d'une cassette parmi l'ensemble des cassettes utilisées pour réaliser un perçage, il n'y aura à retirer et remplacer que cette cassette défectueuse à l'instar de ce qui se fait actuellement où la tête de perçage doit être traitée dans son ensemble.

Selon une caractéristique optionnelle de l'invention, les cassettes sont fixées sur le bloc de support au moyen de vis ou par clipsage.

Selon une caractéristique optionnelle de l'invention, chaque cassette comporte deux forets.

Selon une caractéristique optionnelle de l'invention, les cassettes sont disposées en ligne de manière sensiblement contiguë sur le bloc de support.

Selon une caractéristique optionnelle de l'invention, le dispositif de perçage comprend onze cassettes disposées en ligne, comprenant chacune deux forets disposés de part et d'autre de l'axe de la ligne ainsi formée.

Selon une caractéristique optionnelle de l'invention, chaque cassette comprend un mécanisme d'équilibrage dynamique d'inertie.

On entend par équilibrage dynamique d'inertie la compensation des efforts générés par le mouvement du support de forets de manière à réduire voire annuler les vibrations générées par ce mouvement qui peuvent entraîner des imprécisions lors de l'opération de perçage.

Le mécanisme d'équilibrage dynamique d'inertie peut par exemple consister en un contrepoids en liaison glissière avec l'armature fixe de la cassette exécutant des mouvements contraires au mouvement du support de forets.

Selon une caractéristique optionnelle de l'invention, chaque cassette est équipée d'un moteur brushless.

Le moteur brushless sert notamment à gérer la position du support de forets par rapport à l'armature fixe.

Avantageusement, un moteur brushless est un moteur permettant d'obtenir un fort rendement et une puissance de sortie élevée.

Selon une caractéristique de l'invention, chaque support de foret est équipé d'au moins un dispositif de palpage de la peau de la pièce acoustique à percer.

Ce dispositif de palpage comprend au moins un palpeur et au moins un capteur permettant de détecter à l'aide des palpeurs la position des forets par rapport à la peau de la pièce acoustique à percer. Le dispositif de palpage permet également de plaquer la pièce acoustique à percer sur son support pendant les opérations de perçage.

Selon une caractéristique optionnelle de l'invention, le dimensionnement du moteur est adapté à l'augmentation de l'inertie liée au mécanisme d'équilibrage dynamique.

Selon une caractéristique optionnelle de l'invention, le dispositif de palpage permet de régler la position du support de forets par rapport à la peau de la pièce à percer permettant de maîtriser automatiquement la profondeur de perçage des forets de chaque cassette.

L'invention concerne aussi un procédé de perçage acoustique caractérisé en ce qu'il met en oeuvre un dispositif de perçage de pièces acoustiques comprenant une tête de perçage, la tête de perçage comprenant un bloc support comprenant au moins deux cassettes de perçage autonomes comprenant chacune au moins un foret de perçage.

L'invention concerne enfin un procédé de fabrication d'une pièce acoustique comprenant une peau acoustique et une structure en nid d'abeilles, le procédé comprenant dans l'ordre les étapes suivantes :
- drapage de la peau acoustique d'une nappe de carbone sous forme de tissu ;
- drapage d'une nappe de double-face en polymère pour permettre le collage ultérieur de la peau acoustique sur une structure en nid d'abeilles ;
- rajout de la structure en nid d'abeilles sur la peau acoustique ;
- cuisson unique, pour polymériser les nappes de carbone et de double-face de la peau acoustique, et terminer l'assemblage de la peau acoustique sur la structure en nid d'abeilles ;
- perçage de la peau acoustique par un dispositif de perçage acoustique selon l'invention, permettant ainsi de maîtriser le diamètre des trous acoustiques ainsi percés et donc la performance acoustique de la pièce acoustique finale.

On décrit à présent, à titre d'exemple non limitatif, un mode de réalisation possible de l'invention, en référence aux figures annexées ; sur l'ensemble des figures, des références identiques ou analogues désignent des organes ou ensembles d'organes identiques ou analogues :
- la figure 1 est une vue en perspective d'un dispositif de perçage selon un mode de réalisation préféré de la présente invention,
- la figure 2 est une vue en perspective d'un bloc support du mode de réalisation préféré de la présente invention,
- la figure 3 est une vue en perspective d'une cassette du mode de réalisation préféré de la présente invention,
- la figure 4 est une vue en perspective d'une armature fixe du mode de réalisation préféré de la présente invention,
- la figure 5 est une vue en perspective d'un contrepoids du mode de réalisation préféré de la présente invention,
- la figure 6 est une vue en perspective d'un support mobile de forets du mode de réalisation préféré de la présente invention,
- la figure 7 est une vue en perspective de la cassette sans capots de protection du mode de réalisation préféré de la présente invention,
- la figure 8 est une vue en perspective locale de la tête de perçage du mode de réalisation préféré de la présente invention.

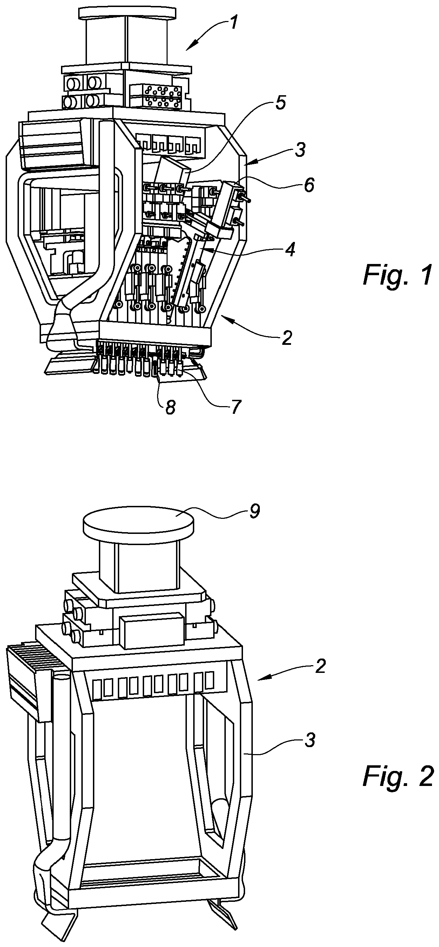

En référence à la figure 1, on décrit un dispositif de perçage 1 comprenant une tête de perçage 2 remarquable en ce que la tête de perçage 2 comprend un bloc de support 3 d'une pluralité de cassettes 4. Les cassettes 4 sont montées sur le bloc de support 3 de manière amovible.

Sur la figure 1 est représentée une cassette 4, en phase de démontage du ou montage sur le bloc de support 3, sur laquelle est visible un contrepoids 5 destiné à un équilibrage dynamique d'inertie. Un contrepoids 5 équipe chaque cassette 4 du dispositif de perçage 1.

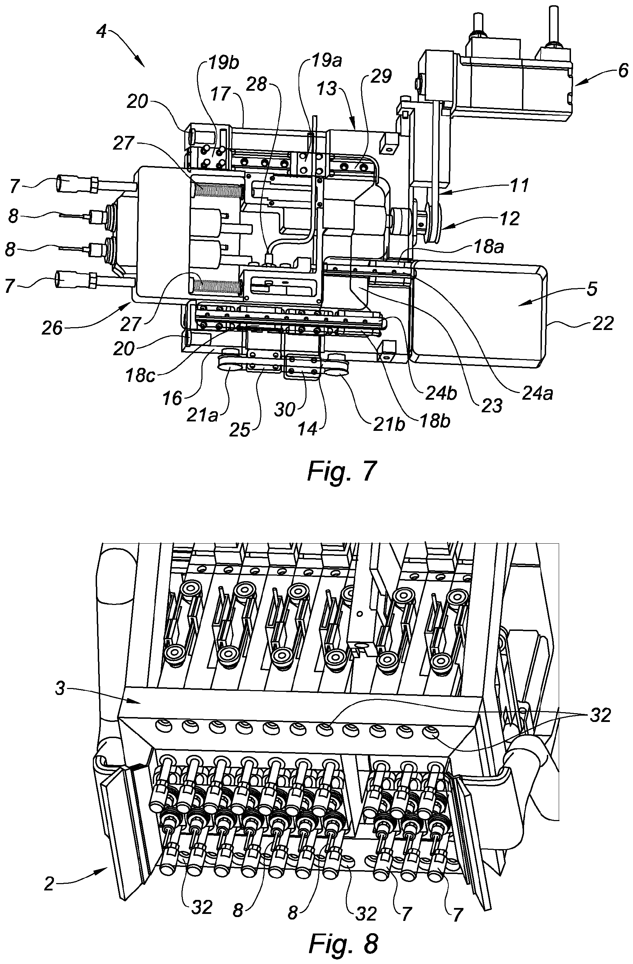

Chaque cassette 4 est équipée d'un moteur brushless 6, de deux palpeurs 7, et de deux forets 8 (voir aussi FIG. 7). Les deux palpeurs 7 sont situés de part et d'autre des deux forets 8 de manière à ce que les palpeurs 7 et les forets 8 soient situés sensiblement sur un même axe.

En référence à la figure 2, le bloc de support 3 comprend une interface de fixation 9 destinée à permettre le montage de la tête de perçage 2 sur le bras d'un robot manipulateur (non représenté).

Le bloc de support 3 comprend aussi un module 10 de pilotage des moteurs brushless 6.

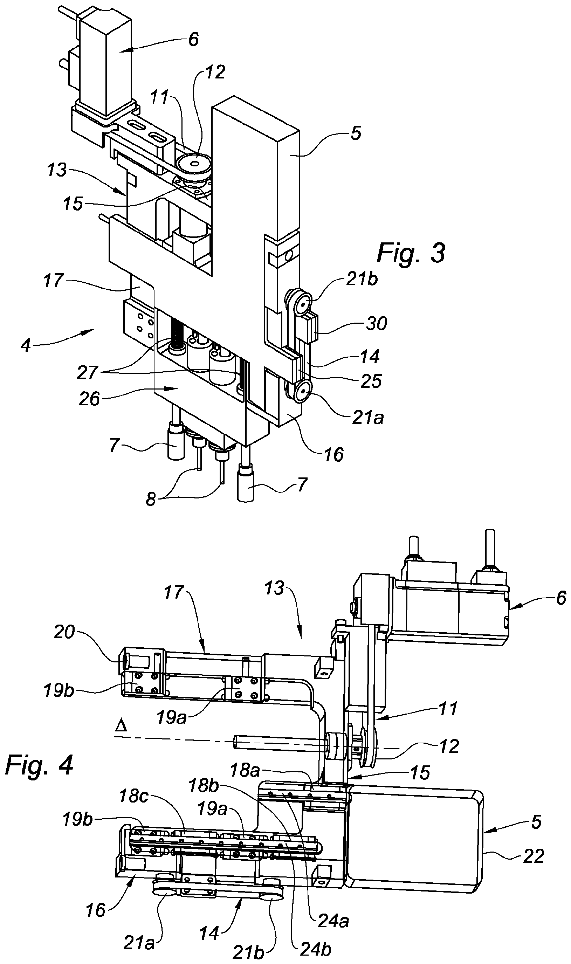

En référence à la figure 3, on décrit une cassette 4 équipant le dispositif de perçage 1.

Le moteur brushless 6 y est représenté relié à une première courroie plate 11 coopérant elle-même avec une vis à billes 12. Ainsi le moteur brushless 6 actionne la vis à billes 12 par l'intermédiaire de la première courroie plate 11.

La vis à billes 12 tient lieu d'actionneur mécanique, elle agit comme un vérin.

La vis à billes 12 est fixée sur une armature fixe 13 de la cassette 4 sensiblement en forme de U de telle manière que la tête de la vis à billes 12 en contact avec la première courroie plate 11 soit sensiblement affleurante à la peau externe de la base de l'armature fixe 13 en forme de U.

Le contrepoids 5 ainsi qu'une deuxième courroie plate 14 ainsi que les deux palpeurs 7 et les deux forets 8 sont aussi représentés.

En référence à la figure 4 on décrit en détail l'armature fixe 13 de la cassette 4.

L'armature fixe 13 présente une forme sensiblement en U, avec une base 15 et deux branches 16 et 17. Le moteur brushless 6 et le contrepoids 5 sont reliés chacun à une extrémité de la base 15.

La base 15 et la branche 16 comprennent respectivement un patin 18a et deux patins 18b, 18c de guidage en translation du contrepoids 5. Le guidage ainsi obtenu permet au contrepoids 5 de translater sensiblement parallèlement aux branches 16 et 17.

La branche 16 comprend aussi la deuxième courroie plate 14 sur laquelle vient s'attacher le contrepoids 5.

Chacune des branches 16 et 17 comprend deux patins de guidage en translation 19a et 19b. Les patins 19a, 19b de la branche 17 sont symétriques aux patins 19a, 19b de la branche 16 par rapport à l'axe principal Δ de l'armature fixe 13.

Un trou taraudé 20 est réalisé à l'extrémité de chacune des branches 16 et 17 de telle manière qu'une vis puisse pénétrer dans chacun des trous 20 suivant l'axe principal de chacune des branches 16 et 17.

La vis à billes traverse la base 15 de l'armature fixe 13 et son axe principal est sensiblement confondu avec celui Δ de l'armature fixe 13. Le filetage de la vis à billes s'étend sur une longueur d'environ 35 mm.

La deuxième courroie plate 14 est disposée le long de la branche 16 et s'étend entre deux poulies 21a et 21b, les poulies 21a et 21b étant disposées de telle manière que la plus courte distance les séparant soit d'une valeur supérieure ou égale à 35 mm.

Il est à noter que les courroies référencées 11 et 14 sont préférentiellement plates mais peuvent aussi bien être des courroies crantées, trapézoïdales, ou tout autre type de courroie. De même, les courroies 11 et 14 peuvent être des chaînes.

Les courroies plates présentent l'avantage d'être très silencieuses, d'être utilisables aux grandes vitesses, d'absorber les vibrations torsionnelles et de présenter un très bon rendement, comparable à celui des engrenages.

La tête de la vis à billes 12 affleurant à la peau externe de la base 15 de l'armature fixe 13 fait office de poulie pour la première courroie plate 11.

Avantageusement, les billes de la vis à bille 12 interposées entre la vis et son logement permettent de réduire notablement voire supprimer les frottements qui ont lieu pendant le mouvement de la vis à billes 12.

D'une manière générale, les vis à billes présentent l'avantage d'un rendement élevé, de permettre des réglages d'une grande précision avec des vitesses de déplacement élevées, de chauffer peu.

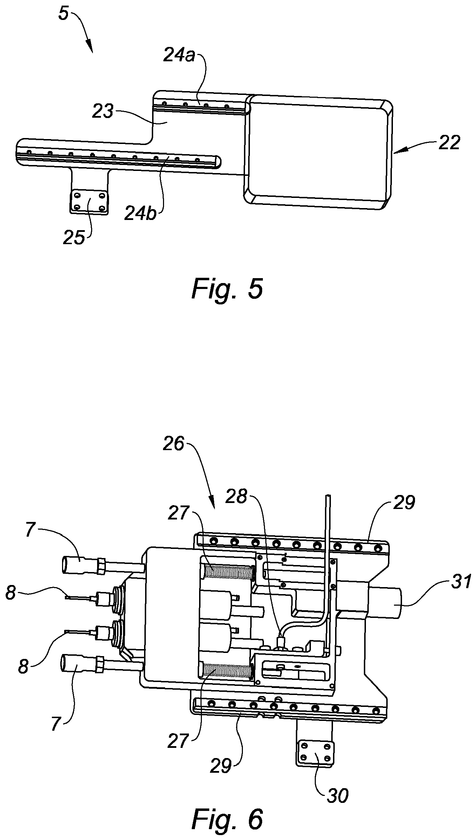

En référence à la figure 5, on décrit plus en détail le contrepoids 5.

Le contrepoids 5 comprend une masse d'inertie 22 et une languette métallique 23. La languette métallique 23 comprend deux rails 24a et 24b agencés entre eux et conformés de manière à ce que le rail 24a coopère avec le patin 18a (Fig. 4) et à ce que le rail 24b coopère avec les patins 18b et 18c. Le contrepoids 5 comprend aussi une bride de raccordement 25 pour raccorder le contrepoids 5 et la deuxième courroie plate 14. La bride de raccordement « mord » la deuxième courroie plate 14 sur un brin de celle-ci compris entre les deux poulies.

En référence à la figure 6, on décrit un support de forets 26 comprenant les palpeurs 7 montés chacun sur un ressort 27, les forets 8, un capteur électrique 28, des rails latéraux 29, une bride de raccordement 30, et un logement 31 pour la vis à billes 12 (Fig. 4).

Lorsqu'une pression est exercée sur l'extrémité des palpeurs 7 destinée à palper, les palpeurs 7 se rétractent vers l'intérieur du support de forets 26 sous l'effet de cette pression. Les ressorts 27 sont montés sur les palpeurs 7 de telle manière que lorsque la pression se relâche, les palpeurs reprennent leur position initiale.

Le capteur électrique 28 est installé dans le support de forets 26 de telle manière qu'il puisse détecter l'entrée dans son champ de détection de l'extrémité distale à l'extrémité de palpage de l'un des palpeurs 7, Le capteur électrique 28 permet donc de savoir automatiquement lorsque ce palpeur 7 est rentré en contact avec la surface de la pièce à percer.

Les rails latéraux 29 sont destinés à coopérer avec les patins 19a et 19b de guidage en translation.

La bride de raccordement 30 est destinée à raccorder le support de forets 26 et la deuxième courroie plate 14 de telle manière que la bride de raccordement 30 « mord » la deuxième courroie plate 14 sur le brin de courroie qui n'est pas « mordu » par la bride de raccordement 25 du contrepoids 5 (Fig. 4 et 5).

Le logement 31 est le logement de la vis à billes 12 dans le support de forets 26.

L'hystérésis électrique de la détection doit être le plus court possible par conséquent, un capteur spécifique par exemple de type capteur laser peut être utilisé en lieu et place du capteur électrique 28, d'autre part l'extrémité distale à l'extrémité de palpage du palpeur 7 devant être détectée peut aussi être en fer doux ou recouverte d'une couche de fer doux.

Afin de faciliter le réglage, le capteur est monté sur une platine réglable avec une vis au pas fin et maintenu en position après ajustement.

Une éventuelle défaillance de ce capteur peut être palliée par un automatisme permettant d'assurer une redondance au voisinage, c'est-à-dire qu'en cas de non détection de l'extrémité distale à l'extrémité de palpage du palpeur 7, il sera considéré que le capteur est défaillant, et l'automatisme commandera alors que les forets de la cassette défaillante avancent à la même vitesse que les forets des cassettes immédiatement au voisinage via les capteurs des cassettes immédiatement au voisinage. Cet avantage évite que chacune des cassettes ne soit équipée de deux capteurs dont l'un est pris en compte en cas de défaillance de l'autre.

Un tel dispositif de palpage permet de maîtriser automatiquement la profondeur de perçage des forets de chaque cassette. Ainsi, là où l'art antérieur ne permettait un perçage des peaux acoustiques qu'antérieur à leur assemblage avec des structures en nid d'abeilles, une telle maîtrise présente l'avantage de permettre si besoin le perçage des peaux acoustiques après assemblage des peaux acoustiques avec des structures en nid d'abeilles sans endommagement notable des structures en nid d'abeilles et sans que les forets de perçage ne traversent de part en part les pièces acoustiques finales le cas échéant.

Le perçage des peaux acoustiques après leur assemblage sur des structures en nid d'abeilles présente plusieurs avantages, notamment celui selon lequel là où les techniques de perçage acoustique antérieures imposaient, lors de la fabrication d'une pièce acoustique,
- le drapage de la peau acoustique d'une nappe de carbone sous forme de tissu,
- la polymérisation de la nappe de carbone par une première cuisson,
- le perçage de la peau acoustique,
- le nappage d'un double-face en polymère pour permettre le collage ultérieur de la peau acoustique sur une structure en nid d'abeilles, puis
- la réticulation par chauffage du double-face pour rouvrir les trous acoustiques, entraînant ainsi une incertitude sur la valeur du diamètre des trous acoustiques, le double-face en polymérisation s'introduisant dans les trous acoustiques par réticulation, et une dégradation conséquente des performances acoustiques de la pièce acoustique,
- le rajout de la structure en nid d'abeilles sur la peau acoustique,
la seconde cuisson pour terminer l'assemblage du panneau acoustique, étape pendant laquelle le double-face est complètement polymérisé.

La présente invention permet de simplifier ce procédé, d'en réduire le coût de mise en oeuvre et d'améliorer la maîtrise de la performance acoustique de la pièce acoustique finale, consistant simplement en :
- un drapage de la peau acoustique d'une nappe de carbone sous forme de tissu,
- un drapage d'une nappe de double-face en polymère pour permettre le collage ultérieur de la peau acoustique sur une structure en nid d'abeilles,
- un rajout de la structure en nid d'abeilles sur la peau acoustique,
- une cuisson unique, pour polymériser les nappes de carbone et de double-face de la peau acoustique, et terminer l'assemblage de la peau acoustique sur la structure en nid d'abeilles,
- un perçage de la peau acoustique par un dispositif de perçage acoustique selon l'invention, permettant ainsi de maîtriser le diamètre des trous acoustiques ainsi percés et donc la performance acoustique de la pièce acoustique finale.

Il est bien entendu tout à fait possible d'utiliser un dispositif de perçage acoustique selon l'invention afin de mettre en oeuvre une technique de fabrication d'une pièce acoustique selon un procédé antérieur.

En référence à la figure 7, on décrit le fonctionnement général de la cassette 4.

Lorsque le moteur Brushless est actionné, il entraîne dans sa course la première courroie plate 11. La première courroie plate 11 étant reliée à la tête de vis à billes 12 faisant office de poulie, la vis à billes 12 est donc entraînée en rotation. Lorsqu'elle tourne, la vis à billes ne présente pas de mouvement de translation par rapport à l'armature fixe 13, la vis à billes 12 est en liaison pivot avec l'armature fixe 13. Dans son mouvement de rotation, la vis à billes 12 entraîne le support de forets 26 grâce au logement 31 comprenant un écrou à billes. Le support de forets 26 translate alors le long des branches 16 et 17 grâce à ses deux rails 29 et aux patins 19a et 19b de guidage en translation de l'armature fixe 13. Ce faisant, la bride de raccordement 30 du support de forets 26 se déplace aussi selon un axe parallèle aux axes des branches 16 et 17, entraînant dans son mouvement la deuxième courroie plate 14 placée sur les deux poulies 21a et 21b. La deuxième courroie plate 14 entraîne alors dans son mouvement la bride de raccordement 25 du contrepoids 5 qui, « mordant » le brin de la deuxième courroie plate 14 laissé libre par la bride de raccordement 30, translate aussi grâce aux rails 24a et 24b et aux patins 18a, 18b, 18c de guidage en translation selon un axe parallèle aux axes des branches 16 et 17 ; mais la bride de raccordement 25 se déplace dans le sens opposé au sens de déplacement de la bride de raccordement 30 du support de forets 26. Ainsi, le support de forets 26 et le contrepoids 5 translatent tous deux de manière synchronisée, selon des axes parallèles, et dans des sens opposés. C'est de cette manière que le contrepoids 5 permet d'obtenir l'équilibrage d'inertie dynamique. Les forets 8 et palpeurs 7, faisant partie du support de forets 26, se déplacent de la même manière que celui-ci.

En référence à la figure 8, on décrit la fixation des cassettes 4 sur le bloc de support 3.

Les cassettes 4 sont fixées sur le bloc de support 3 grâce aux trous taraudés 20 et à des vis adaptées (non représentées). Les cassettes 4 sont positionnées par rapport au bloc de support 3 de telle manière que les trous taraudés 20 soient tous en vis-à-vis d'un trou lisse 32 dont le diamètre est supérieur au diamètre nominal des vis destinées à être vissées dans les trous taraudés 20, mais inférieur à la tête des dites vis. Le montage et le démontage d'une cassette 4 fixée sur le bloc de support 3 se fait donc très aisément et dispense de l'intervention d'une équipe de maintenance lorsqu'une cassette 4 est défectueuse et qu'elle doit être remplacée.

L'ensemble comprenant le bloc de support 3 et les cassettes 4 forme la tête de perçage 2 (Fig. 1). La tête de perçage 2 est mue par le bras d'un robot manipulateur ou d'une machine 5 axes (non représenté) programmé pour déplacer la tête de perçage 2 sur les zones successives d'une pièce à percer (non représentée).

Lorsque la surface de la pièce à percer ne présente pas un profil uniforme, le support de forets 26 de chaque cassette 4 se déplace de manière à ce que tous les forets 8 de toutes les cassettes 4 se trouvent à la même distance de la zone de la pièce qui leur est en regard. Cette opération est rendue possible grâce aux palpeurs 7 des cassettes 4 qui permettent, en coopération avec le capteur électrique 28 de détecter la surface de la pièce à percer et ajuster la hauteur du support de forets 26 en conséquence.

L'opération de perçage commence quand tous les palpeurs 7 des cassettes 4 sont en contact avec la surface de la pièce à percer et quand les hauteurs des supports de forets 26 par rapport à la surface de la pièce à percer sont tous identiques.

Avantageusement, le dispositif de perçage 1 tel que décrit plus haut peut être agrémenté d'un programme et appareillage associé permettant d'enregistrer les différentes configurations des supports de forets 26 les uns par rapport aux autres pour chaque zone de la pièce à percer au-dessus de laquelle est positionnée la tête de perçage 2. Ainsi si la tête de perçage 2 se configure plus rapidement en passant d'une zone à percer à une autre si elle doit percer une pièce qu'elle a déjà percé une fois, puisqu'elle peut régler le positionnement des support de forets 26 des cassettes 4 les uns par rapport aux autres pendant son déplacement d'une zone à percer vers une autre.

## Revendications

1. Dispositif (1) de perçage d'une pièce acoustique comprenant une tête de perçage (2), la tête de perçage (2) comprenant un bloc de support (3) comprenant au moins deux cassettes (4) de perçage autonomes comprenant chacune au moins un foret (8) de perçage, une armature fixe (13) par rapport au bloc de support (3) et un support de forets (26) mobile le long de l'axe principal (Δ) de la cassette entre une position rétractée et une position déployée, **caractérisé en ce que** chaque support de forets (26) est équipé d'au moins un dispositif de palpage (7) de la peau de la pièce acoustique à percer permettant de maîtriser automatiquement la profondeur de perçage des forets de chaque cassette, le dispositif de palpage comprenant au moins un palpeur et au moins un capteur permettant de détecter à l'aide des palpeurs la position des forets par rapport à la peau de la pièce acoustique à percer.

2. Dispositif (1) selon la revendication 1 **caractérisé en ce que** chaque cassette (4) comprend un moyen (12) de mise en mouvement de translation de son support de forets (26) par l'intermédiaire d'un mécanisme monté sur son armature fixe (13) et sur le support de forets (26).

3. Dispositif (1) selon l'une quelconque des revendications 2 **caractérisé en ce que** le moyen (12) de mise en mouvement de translation est une vis à billes (12), la vis à billes (12) étant montée sur l'armature fixe (13) de la cassette (4).

4. Dispositif (1) selon l'une quelconque des revendications 2 ou 3 **caractérisé en ce que** le moyen de mise en mouvement de translation (12) permet de régler en position intermédiaire le support de forets (26) entre sa position rétractée et sa position déployée.

5. Dispositif (1) selon l'une quelconque des revendications précédentes **caractérisé en ce que** chaque cassette (4) est fixée sur le bloc de support (3) de manière amovible.

6. Dispositif (1) selon la revendication 5 **caractérisé en ce que** les cassettes (4) sont fixées sur le bloc de support (3) au moyen de vis ou par clipsage.

7. Dispositif (1) selon l'une quelconque des revendications précédentes **caractérisé en ce que** chaque cassette (4) comporte deux forets (8).

8. Dispositif (1) selon l'une quelconque des revendications précédentes **caractérisé en ce que** les cassettes (4) sont disposées en ligne de manière sensiblement contiguë sur le bloc de support (3).

9. Dispositif (1) selon la revendication 8 **caractérisé en ce qu'**il comprend onze cassettes (4) disposées en ligne, comprenant chacune deux forets (8) disposés de part et d'autre de l'axe de la ligne ainsi formée.

10. Dispositif (1) selon l'une quelconque des revendications précédentes **caractérisé en ce que** chaque cassette (4) comprend un moyen (5) d'équilibrage dynamique d'inertie.

11. Dispositif (1) selon l'une quelconque des revendications précédentes **caractérisé en ce que** chaque cassette (4) est équipée d'un moteur brushless (6).

12. Dispositif (1) selon la revendication 1 **caractérisé en ce que** le dispositif de palpage (7) permet de régler la position du support de forets (26) par rapport à la peau de la pièce à percer.

13. Procédé de perçage acoustique **caractérisé en ce qu'**il met en oeuvre un dispositif (1) de perçage de pièces acoustiques selon l'une quelconque des revendications 1 à 12.

14. Procédé de fabrication d'une pièce acoustique comprenant une peau acoustique et une structure en nid d'abeilles, le procédé comprenant dans l'ordre les étapes suivantes :
- drapage de la peau acoustique d'une nappe de carbone sous forme de tissu ;
- drapage d'une nappe de double-face en polymère pour permettre le collage ultérieur de la peau acoustique sur une structure en nid d'abeilles ;
- rajout de la structure en nid d'abeilles sur la peau acoustique ;
- cuisson unique, pour polymériser les nappes de carbone et de double-face de la peau acoustique, et terminer l'assemblage de la peau acoustique sur la structure en nid d'abeilles ;
- perçage de la peau acoustique par un dispositif de perçage acoustique selon l'une quelconque des revendications 1 à 12, permettant ainsi de maîtriser le diamètre des trous acoustiques ainsi percés et donc la performance acoustique de la pièce acoustique finale.

## Patentansprüche

1. Vorrichtung (1) zum Bohren einer akustischen Komponente, die einen Bohrkopf (2) umfasst, wobei der Bohrkopf (2) einen Trägerblock (3) umfasst, der mindestens zwei autonome Bohrkassetten (4) umfasst, die jeweils mindestens einen Bohrer (8), eine in Bezug auf den Trägerblock (3) feste Bewehrung (13) und einen Bohrerträger (26) umfassen, der entlang der Hauptachse (Δ) der Kassette zwischen einer eingefahrenen Position und einer ausgefahrenen Position beweglich ist, **dadurch gekennzeichnet, dass** jeder Bohrerträger (26) mit mindestens einer Abtastvorrichtung (7) für die Haut der zu bohrenden akustischen Komponente ausgestattet ist, die es ermöglicht, die Bohrtiefe der Bohrer jeder Kassette automatisch zu steuern, wobei die Abtastvorrichtung mindestens einen Taster und mindestens einen Sensor umfasst, der es ermöglicht, mit Hilfe der Taster die Position der Bohrer in Bezug auf die Haut der zu bohrenden akustischen Komponente zu erkennen.

2. Vorrichtung (1) nach Anspruch 1, **dadurch gekennzeichnet, dass** jede Kassette (4) ein Mittel (12) zum Verschiebebewegen ihres Bohrerträgers (26) mittels eines Mechanismus, der an ihrer festen Bewehrung (13) und am Bohrerträger (26) angebracht ist, umfasst.

3. Vorrichtung (1) nach einem der Ansprüche 2, **dadurch gekennzeichnet, dass** das Verschiebebewegungsmittel (12) eine Kugelumlaufspindel (12) ist, wobei die Kugelumlaufspindel (12) an der festen Bewehrung (13) der Kassette (4) angebracht ist.

4. Vorrichtung (1) nach einem der Ansprüche 2 oder 3, **dadurch gekennzeichnet, dass** das Verschiebebewegungsmittel (12) es ermöglicht, den Bohrerträger (26) auf eine Zwischenposition zwischen seiner eingefahrenen Position und seiner ausgefahrenen Position einzustellen.

5. Vorrichtung (1) nach einem der vorstehenden Ansprüche, **dadurch gekennzeichnet, dass** jede Kassette (4) abnehmbar am Trägerblock (3) befestigt ist.

6. Vorrichtung (1) nach Anspruch 5, **dadurch gekennzeichnet, dass** die Kassetten (4) mittels Schrauben oder durch Einrasten am Trägerblock (3) befestigt sind.

7. Vorrichtung (1) nach einem der vorstehenden Ansprüche, **dadurch gekennzeichnet, dass** jede Kassette (4) zwei Bohrer (8) umfasst.

8. Vorrichtung (1) nach einem der vorstehenden Ansprüche, **dadurch gekennzeichnet, dass** die Kassetten (4) in Reihe im Wesentlichen zusammenhängend am Trägerblock (3) angeordnet sind.

9. Vorrichtung (1) nach Anspruch 8, **dadurch gekennzeichnet, dass** sie elf in Reihe angeordnete Kassetten (4) umfasst, die jeweils zwei Bohrer (8) umfassen, die beiderseits der Achse der so gebildeten Reihe angeordnet sind.

10. Vorrichtung (1) nach einem der vorstehenden Ansprüche, **dadurch gekennzeichnet, dass** jede Kassette (4) ein Mittel (5) zum dynamischen Ausgleichen der Trägheit umfasst.

11. Vorrichtung (1) nach einem der vorstehenden Ansprüche, **dadurch gekennzeichnet, dass** jede Kassette (4) mit einem bürstenlosen Motor (6) ausgestattet ist.

12. Vorrichtung (1) nach Anspruch 1, **dadurch gekennzeichnet, dass** die Abtastvorrichtung (7) es ermöglicht, die Position des Bohrerträgers (26) in Bezug auf die Haut der zu bohrenden Komponente einzustellen.

13. Akustisches Bohrverfahren, **dadurch gekennzeichnet, dass** es eine Vorrichtung (1) zum Bohren von akustischen Komponenten nach einem der Ansprüche 1 bis 12 zum Einsatz bringt.

14. Verfahren zur Herstellung einer akustischen Komponente, die eine akustische Haut und eine Wabenstruktur umfasst, wobei das Verfahren die folgenden Schritte in dieser Reihenfolge umfasst:
- Drapieren der akustischen Haut einer Kohlenstoffbahn Gewebeform,
- Drapieren einer doppelseitigen Polymerbahn, um das spätere Kleben der akustischen Haut auf eine Wabenstruktur zu ermöglichen;
- Hinzugeben der Wabenstruktur auf die akustische Haut;
- einmaliges Brennen, um die Kohlenstoff- und die zweiseitige Bahn der akustischen Haut zu polymerisieren und das Verbinden der akustischen Haut mit der Wabenstruktur abzuschließen;
- Bohren der akustischen Haut mit einer akustischen Bohrvorrichtung nach einem der Ansprüche 1 bis 12, was es so ermöglicht, den Durchmesser der so gebohrten akustischen Löcher und damit die akustische Leistung der fertigen akustischen Komponente zu steuern.

## Claims

1. A device (1) for drilling an acoustic component comprising a drilling head (2), the drilling head (2) comprising a support block (3) comprising at least two autonomous drilling cassettes (4) each comprising at least one drilling bit (8), a stationary armature (13) with respect to the support block (3) and a bit support (26) moveable along the main axis (Δ) of the cassette between a retracted position and an deployed position, **characterized in that** each bit support (26) is equipped with at least one device (7) for sensing the skin of the acoustic component to be drilled making it possible to automatically control the drilling depth of the bits of each cassette, the sensing device comprising at least one sensing means and at least one sensor making it possible to detect, using the sensing means, the position of the bits with respect to the skin of the acoustic component to be drilled.

2. The device (1) according to claim 1 **characterized in that** each cassette (4) comprises a means (12) for moving its bit support (26) in translation through a mechanism mounted on the stationary frame (13) thereof and on the bit support (26).

3. The device (1) according to any one of claims 2 **characterized in that** the means (12) for moving in translation is a ball screw (12), the ball screw (12) being mounted on the stationary frame (13) of the cassette (4).

4. The device (1) according to any one of claims 2 or 3 **characterized in that** the means for moving in translation (12) makes it possible to adjust the bit support (26) in an intermediate position between its retracted position and its deployed position.

5. The device (1) according to any one of the preceding claims **characterized in that** each cassette (4) is removably fastened on the support block (3).

6. The device (1) according to claim 5 **characterized in that** the cassettes (4) are fastened on the support block (3) by means of screws or by clipping.

7. The device (1) according to any one of the preceding claims **characterized in that** each cassette (4) includes two bits (8).

8. The device (1) according to any one of the preceding claims **characterized in that** the cassettes (4) are disposed in line in a substantially contiguous manner on the support block (3).

9. The device (1) according to claim 8 **characterized in that** it comprises eleven cassettes (4) disposed in a line, each comprising two bits (8) disposed on either side of the axis of the line thus formed.

10. The device (1) according to any one of the preceding claims **characterized in that** each cassette (4) comprises an inertial dynamic balancing means (5).

11. The device (1) according to any one of the preceding claims **characterized in that** each cassette (4) is equipped with a brushless motor (6).

12. The device (1) according to claim 1 **characterized in that** the sensing device (7) makes it possible to adjust the position of the bit support (26) with respect to the skin of the component to be drilled.

13. An acoustic drilling method **characterized in that** it implements a device (1) for drilling acoustic components according to any one of claims 1 to 12.

14. A method for manufacturing an acoustic component comprising an acoustic skin and a honeycomb structure, the method comprising the following steps in order:
- draping the acoustic skin with a carbon layer in the form of fabric;
- draping a double-sided polymer layer to allow subsequent bonding of the acoustic skin to a honeycomb structure;
- adding the honeycomb structure on the acoustic skin;
- single curing, to polymerize the carbon and double-sided layers of the acoustic skin, and finishing the assembly of the acoustic skin on the honeycomb structure;
- drilling the acoustic skin by an acoustic drilling device according to any one of claims 1 to 12, thus making it possible to control the diameter of the acoustic holes thus drilled and therefore the acoustic performance of the final acoustic component.
